(19) Europäisches Patentamt
European Patent Office
Office européen des brevets

(11) **EP 4 455 945 A1**

(12) **EUROPEAN PATENT APPLICATION**

(43) Date of publication:
**30.10.2024 Bulletin 2024/44**

(51) International Patent Classification (IPC):
**G06N 3/082** (2023.01)  **G06N 3/045** (2023.01)
**G06N 3/0985** (2023.01)

(21) Application number: **23170174.9**

(22) Date of filing: **26.04.2023**

(52) Cooperative Patent Classification (CPC):
**G06N 3/045; G06N 3/0464; G06N 3/082;
G06N 3/096; G06N 3/0985**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **University College Dublin
Dublin 4 (IE)**

(72) Inventor: **The designation of the inventor has not
yet been filed**

(74) Representative: **Purdylucey Intellectual Property
6-7 Harcourt Terrace
D02 FH73 Dublin 2 (IE)**

(54) **DYNAMICAL MODEL COMPRESSION FOR DEEP NEURAL NETWORKS**

(57)    Disclosed is a method of dynamically compressing and scaling a deep neural network, that includes dividing the deep neural network into a plurality of segments, and a final early exit connected to a last segment of the plurality of segments, connecting at least one early exit to an output of each segment during run-time, based on an early exit configuration that is determined dynamically during the run-time based on a target accuracy and complexity, and ending the run-time and exiting the deep neural network from an early exit, and setting an output of said early exit as a final output of the deep neural network, when said early exit reports a confidence value higher than an associated threshold.

FIG.1A

**Description**

**Field**

This invention relates to deep neural networks, and more specifically to compressing deep learning models to dynamically adapt to the real-time demands.

**Background of invention**

Deep learning (DL) models have proven to be successful in many applications. However, they require a significant number of computations to be performed in a short time. Many portable devices, such as Internet of Things (IoT) devices and smartphones, possess only limited computing and memory resources, and deploying these DL models in resource constrained environments is a challenge. In addition, the runtime latencies and power consumption would be unacceptable when large DL models are deployed in such environments. Even for resource-rich systems such as data centers, some concerns, like the huge energy consumption, remain. Therefore, optimizing model complexity is essential for deploying DL techniques on practical systems.

Several model compression and optimization techniques have been proposed to address the complexity issue. Such techniques usually involve reducing computational precision by quantizing weights or feature maps with fewer bits, pruning inconsequential network connections to reduce computations, creating a smaller model by distilling knowledge from a larger model, developing newer model architectures with lower complexity etc. While all of them are successful at varying levels, they do not consider the 'input data difficulty' while optimizing the overall model complexity. In practice, the input data have differences in difficulty. A 'difficult' input case may require deep models to obtain acceptable results, but 'easy' cases only need smaller (shallower) DL models. However, most existing applications use the same fixed data path for all inputs and waste computation on 'easy' inputs. In addition, these model compression techniques generate fixed model variants before the deployment, which necessitate the creation of multiple variants of the same model to support different compression rates for varied real-time performance requirements. In practical scenarios, performance demands can vary over time, and if fixed data path models are used, entire models need to be replaced every time performance targets are changed. This means that the hardware device must store multiple compressed variants of the same model and spend considerable resources to reload different models into memory while applying different compression rates. Storing multiple versions require large space and hot switching between models is difficult.

Further, existing compression methods cannot change the compression rate during the running time. The practical situation as well as the requirement of model performance and complexity vary over time. The applications need to alter their strategy to achieve the maximum power saving while maintaining an acceptable performance. For example, a power hungry data center can normally host services at full speed. However, if there is a power shortage happening, the data center can temporarily downgrade model performance for power saving. Therefore, the model compression methods which are applied to the training and design phase are static, and changing the compression level means repeating the whole process.

In view of the above, there is a need for a system and method that overcomes the above-mentioned advantages, and facilitates compression of deep learning models to dynamically adapt to the real-time demand.

**Summary of the invention**

In an aspect of the present invention, there is provided a method of dynamically compressing and scaling a deep neural network that includes dividing the deep neural network into a plurality of segments, and a final early exit connected to a last segment of the plurality of segments, connecting at least one early exit to an output of each segment during run-time, based on an early exit configuration that is determined dynamically during the run-time based on a target accuracy and complexity, and ending the run-time and exiting the deep neural network from an early exit, and setting an output of said early exit as a final output of the deep neural network, when said early exit reports a confidence value higher than an associated threshold.

In an embodiment of the present invention, each early exit comprises an early exit function for receiving an output of a previous segment and generating an output in a format compatible with the deep neural network, and a decision function for deciding whether to exit early or not by comparing a confidence value from an output of the early exit function with an associated threshold, passing the output of the previous segment to a next segment, when the confidence value is less than the associated threshold, and exit the computing from the deep neural network with the output of the early exit function when the confidence value is greater than or equal to the associated threshold.

In an embodiment of the present invention, the early exit configuration enumerates early exit function and associated threshold value to be used at output of each segment of the deep neural network, and wherein the early exit configuration is dynamically selected from a set of candidate early exit configurations based on the target accuracy and complexity.

In an embodiment of the present invention, the set of candidate early exit configurations is formulated based on a plurality of combinations of a plurality of candidate early exit functions of each segment, and a plurality of candidate threshold values of each early exit function.

In an embodiment of the present invention, the method comprises setting the threshold value of the last early exit as zero, and forcing an exit at the last early exit for all data samples that haven't previously exited early.

In an embodiment of the present invention, the method comprises searching the set of candidate early exit configurations by experimenting with different trade-off factors, wherein the trade-off factor is a parameter to control weighting of accuracy and complexity.

In an embodiment of the present invention, the method includes employing a circular search for dynamically determining the early exit configuration, by modifying early exit function and associated threshold value of each early exit position iteratively to obtain an early exit configuration whose trade-off factor is not optimizable further.

In an embodiment of the present invention, the method includes employing a singular search for dynamically determining the early exit configuration, by modifying early exit function and associated threshold value of first to last early exit positions sequentially to obtain an early exit configuration with optimized trade-off factor.

In an embodiment of the present invention, the method includes comprising switching to another early exit configuration during run-time, based on the demand of the deep neural network.

In another aspect of the present invention, there is provided a dynamically compressible and scalable deep neural network, that includes a plurality of segments; a final early exit connected to a last segment of the plurality of segments; and at least one early exit attachable to an output of each segment during run-time, based on an early exit configuration that is determined dynamically during the run-time based on a target accuracy and complexity, wherein the run-time ends and the deep neural network is exited from an early exit, when said early exit reports a confidence value higher than an associated threshold.

In yet another aspect of the present invention, there is provided a non-transitory computer readable medium having stored thereon computer-executable instructions which, when executed by a processor, cause the processor to divide the deep neural network into a plurality of segments, and a final early exit connected to a last segment of the plurality of segments, connect at least one early exit to an output of each segment during run-time, based on an early exit configuration that is determined dynamically during the run-time based on a target accuracy and complexity, and end the run-time and exit the deep neural network from an early exit, and setting an output of said early exit as a final output of the deep neural network, when said early exit reports a confidence value higher than an associated threshold.

Various embodiments of the present invention provide a dynamic model compression and dynamic complexity scaling technique using early exits. The present invention provides a groups of early exit networks to an existing deep learning model to achieve dynamical model compression in fine grain, satisfying the real-time demand. The dynamic compression method performs optimized approaches for organizing multiple early exits for arbitrary targets and therefore enabling dynamic model scaling during the inference phase. The early exit configurations are generated based on arbitrary trade-offs between performance and computational complexity to provide a nearly continuous set of fine-grained performance-tuning options. The exit condition can be varied during inference to achieve complexity scaling while meeting real-time performance requirements. This makes the DL model fully flexible, supporting on-demand performance, and the original performance fully restorable if and when required. The dynamic model compression method includes a systematic approach to employ groups of exits to achieve arbitrary compression levels, which includes storing smalling early exit networks instead of storing multiple versions of a model. The configuration switching which involves loading early exits or even changing thresholds only is much easier than reloading the whole network. The dynamic compression method enables dynamic inference data paths based on the difficulty of the input sample. Here, the inference of an input sample would exit early if the early exit from an intermediate layer generates an acceptable result. Thus 'simpler' inputs only pass through a partial network, saving all remaining computations on the rest of the network. The dynamic compression method enables dynamic model scaling to address real-time changes in performance-complexity demands by changing the configuration of early exits. The dynamic compression method not only use less computation to achieve similar performance, but the compression scale is configurable during the run-time. The users can choose the configuration to suit their real-time demand with the minimum complexity exactly. This method can reduce the huge power consumption caused by deep networks while satisfying the real-time demand for different applications, from battery powered mobile devices to energy-hungry data centres.

## Brief Description of the Drawings

The invention will be more clearly understood from the following description of an embodiment thereof, given by way of example only, with reference to the accompanying drawings, in which:-

FIG. 1A illustrates an overview of a dynamic model compression system, in accordance with an embodiment of the present invention;

FIG. 1B illustrates a segmented backbone network and a set of early exits attached to the backbone network in detail, in accordance with an embodiment of the present invention;

FIG.2 illustrates a run-time inference algorithm for dynamic model compression of the deep neural network, in accordance with an embodiment of the present invention;

FIG.3 illustrates accuracy and predictions having higher confidence than the threshold by an early exit;

FIG.4 illustrates accuracy and its conservative estimation and exiting rate with respect to different thresholds by an early exit, in accordance with an embodiment of the present invention;

FIG.5 illustrates a circular search algorithm for searching an early exit configuration, in accordance with an embodiment of the present invention;

FIG.6 illustrates a single search algorithm for searching early exit configuration, in accordance with an embodiment of the present invention;

FIG. 7 is a flowchart illustrating a method of applying dynamic model compression to a deep learning model, in accordance with an embodiment of the present invention;

FIG.8 shows a table illustrating required MACs (indicative of complexity) when a certain Accuracy drop is allowed, while implementing dynamic model compression on different networks with different datasets;

FIGs.9A, 9B and 9C illustrate performance of searched configuration and stand-alone early exits for three different types of neural networks ResNet 34, ResNet 50 and ResNet 152 respectively on dataset such as CIFAR-10; and

FIGs.10A, 10B and 10C illustrate performance of searched configuration and stand-alone early exits for three different types of neural networks ResNet 34, ResNet 50 and ResNet 152 respectively on dataset such as ImageNet.

## Detailed Description of the drawings

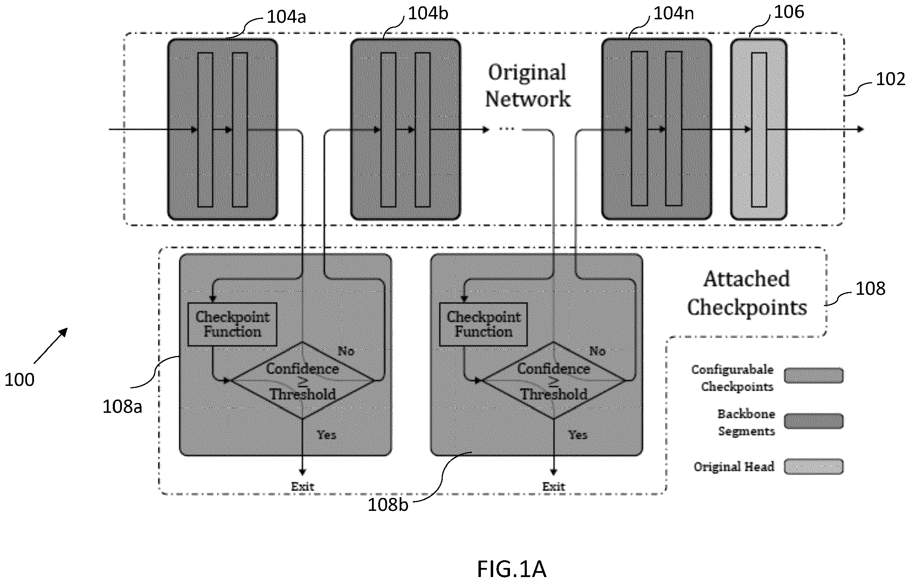

FIG. 1A illustrates an overview of a dynamic model compression system 100, in accordance with an embodiment of the present invention. The dynamic model compression system 100 includes an original deep neural network 102 that is formed of first through last backbone segments 104a till 104n and a final exit 106 connected to the last backbone segment 104n. The first through last backbone segments 104a till 104n form a backbone for feature extraction and the final exit 106 forms a small network at the end for the final output. The backbone part is typically stacked as multiple dividable hidden layers. Therefore, the backbone of the original deep neural network 102 is divided into N segments. The nature of this segmentation could be fine or granular.

The dynamic model compression system 100 further includes a plurality of early exits 108a and 108b, each attached to an end of corresponding backbone segment. In an example, a first exit 108a is attached to an end of the first backbone segment 104a, a second exit 108b is attached to an end of the second backbone segment 104b, and so on. Although, two early exits 108a and 108b are being shown herein, it would be apparent to one of ordinary skill in the art, that there may be more than two early exits, such that ends of each of first through $(N - 1)^{th}$ backbone segments are connected to respective exits. The exits 108a and 108b (hereinafter collectively referred to as early exits 108) are attached to hidden layers of the original network 102 for producing an early estimate of the final result.

At each early exit, the output of corresponding backbone segment is processed through an early exit function to generate a confidence level of the output. When the confidence level driven from the output of the early exit function is greater than or equal to its associated threshold, the inference will exit immediately. Else, it passes the output of the previous backbone segment to the next backbone segment. It is to be noted that the early exit functions and their thresholds are configurable to adapt to varying performance-complexity targets. The early exiting is a fast inference technique that uses acceptable intermediate outputs as estimates of final results and terminates the model inference in the early layers of the deep learning model 102.

The inference process would be concluded at an early layer if the output generated from an early exit is acceptable. This approach saves computations in the remaining layers and results in a smaller, lower complexity model for 'easier' to process input data. For more 'difficult' to process input data, inference computations at further layers would be activated until an acceptable result is obtained at a later exit or completely executes all model layers. The proposed system 100 is compatible and can be used in conjunction with other compression techniques.

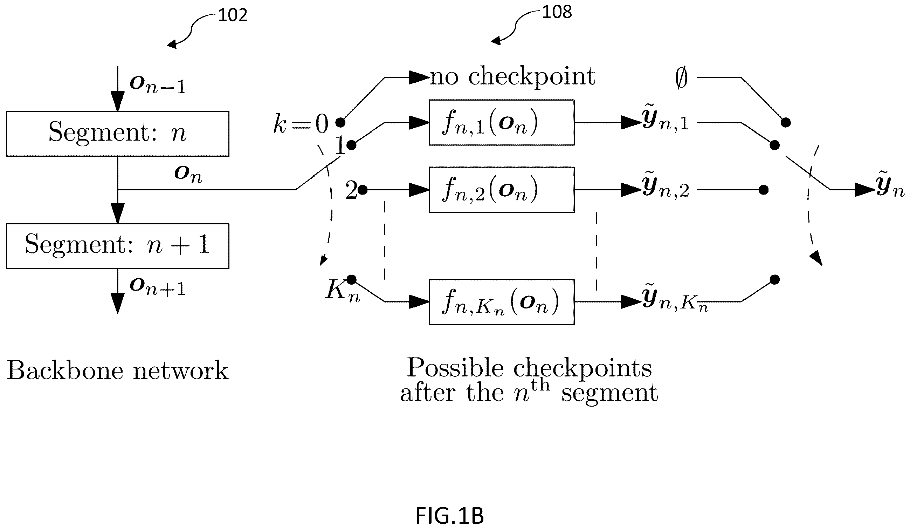

FIG. 1B illustrates a backbone network 102 and a set of early exits 108 attached to the backbone network 102 in detail, in accordance with an embodiment of the present invention.

The backbone network 102 is shown to include an $n^{th}$ backbone segment and an $(n + 1)^{th}$ backbone segment, and a set of $k^{th}$ possible candidate early exits after the $n^{th}$ backbone segment. The output of the $n^{th}$ and $(n + 1)^{th}$ backbone segments may be referred to as $o_n$ and $o_{n+1}$ respectively. At run-time, at most one of $K_n$ candidate early exit functions, indexed by $k$, can be applied to the output of the $n^{th}$ backbone segment, whose task is to make an early estimate of the output of the network 102. The output $\tilde{y}_{n,k}$ of an early exit $k$ for $n^{th}$ segment may be referred by the following equation:

$$\widetilde{\boldsymbol{y}}_{n,k} = f_{n,k}\left(\boldsymbol{o}_n\right) \quad \dots\dots\dots\dots\dots\dots\dots\dots\dots\dots\dots\dots\dots\dots\dots\dots(1)$$

where $\widetilde{\boldsymbol{y}}_{n,k}$ refers to an intermediate output of $k^{th}$ early exit, and that has the compatible format as the original network's output $\boldsymbol{o}_n$. Each of the early exit functions may be designed and trained offline independently of any other and may be fixed at run-time. Note that $\widetilde{\boldsymbol{y}}_{n,k}$ may be compatible with the original network's output but not necessarily in exactly the same format. It could for example be shorter, providing classification results for a sub-set of classes, or perhaps some clustering of classes. The output of the $k^{th}$ early exit for $n^{th}$ segment may be referred to as $\widetilde{\boldsymbol{y}}_n$. For ease of description, the pretrained small network 106 at the end of the original backbone network which is the final 'early exit', may be denoted as $f_{N,1}$. The samples that do not exit early would eventually pass through the final exit 106.

In an embodiment of the present invention, a confidence value may be determined for each output ($\widetilde{\boldsymbol{y}}_{n,k}$) of each check point function. The confidence value of an output may be an estimate of correctness of the output. For classification problems, the confidence may be the maximum value of the predicted class probability, i.e.: $max(\widetilde{\boldsymbol{y}}_{n,k})$. Further, a threshold $t$ may be applied to each confidence value, in order to make an early-exit decision. A high threshold limits an exit such that only highly confident samples exit early, and a lower threshold would allow more samples to exit early. Accordingly, the threshold $t$ can be adjusted to obtain different complexity/accuracy trade-offs.

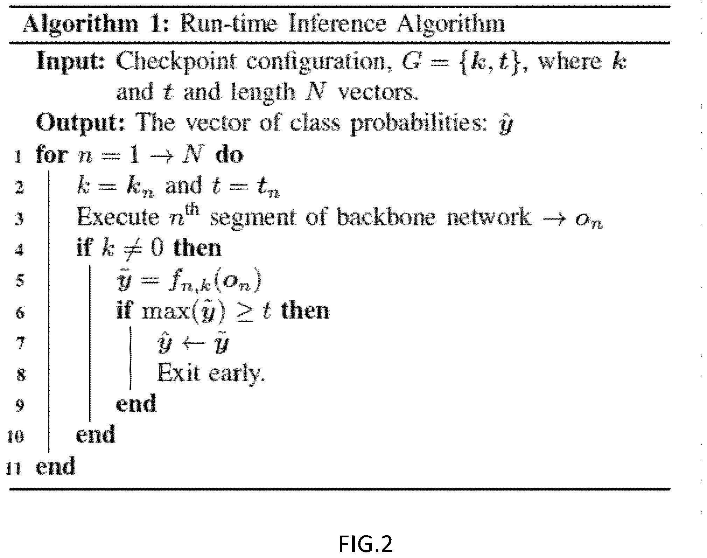

FIG.2 illustrates a run-time inference algorithm for dynamic model compression of the deep neural network 102, in accordance with an embodiment of the present invention. The early exits may be applied to the backbone segments based on pre-defined configuration groups, that enumerate which early exit function and what threshold value to be used at the output of each segment. A early exit configuration may be referred to as $G = \{\boldsymbol{k}, \boldsymbol{t}\}$ and comprise a length $N$ ordered list of function indices, $\boldsymbol{k}$ and thresholds $\boldsymbol{t}$, such that the early exit to be used after the $n^{th}$ segment is $f_{n,kn}$ i.e. $\widetilde{\boldsymbol{y}}_n \triangleq \widetilde{\boldsymbol{y}}_{n,k_n}$, and the corresponding confidence is $max(\widetilde{\boldsymbol{y}}_{n,k})$. Thus, the configuration enables early exits at multiple positions of the deep learning model. The model confidence means an estimate of result correctness from the model itself. For classification problems, the confidence can be interpreted as the maximum value of the predicted probabilities, which is $max(\widetilde{\boldsymbol{y}}_{n,k})$. This confidence is then compared against corresponding threshold $t_n$ in order to make an early-exit decision. The threshold $t$ is a pre-defined value that controls which samples should exit. A high threshold limits an early exit to exit high confident samples only, and a low threshold would exit most samples. If the confidence is greater than or equal to corresponding threshold value, i.e. $max(\widetilde{\boldsymbol{y}}_n) \geq t_n$, the computation is terminated (early exited) and the prediction will be the most likely class given by this early exit i.e. $argmax(\widetilde{\boldsymbol{y}}_n)$. Note that $k_N$ is set to be 1 and $t_N = 0$ forcing the last 'early exit' 106 to always execute, providing a final decision, $f_{N,1}$ and forcing an exit at that 'early exit' 106 for all samples that haven't previously exited early.

In an embodiment of the present invention, the design of an early exit is based on the trade-off between complexity and performance. Although more complex networks have higher stand-alone performance, they would introduce more overhead and can affect the system's overall performance. One of the simplest forms of an early exit is the multilayer perceptron. However, any functions that can generate a compatible output are eligible early exit functions. Meanwhile, since every early exit is independent of others, there is no requirement for all early exits to have the same architecture. They can be designed and trained separately. It is also possible to design multiple candidate early exits for the same position. The searching algorithm (discussed later) may find the most suitable one for different targets. Herein, small Multilayer Perceptrons (MLPs) may be used as early exits to generate results. An average pooling layer may be employed before the first MLP layer to reduce the feature map's height and width to 1.

Referring to FIG.1A, it is to be noted that during the training process, the original backbone network 102 is frozen, and only the early exit network 108 is trained. The freezing the original network 102 ensures that the system can restore full performance at any time since the original model is left untouched. It also ensures that all early exits are independent of each other and the original network 102 because they do not share any region of the network. Since the training of each early exit is isolated, multiple early exits may be trained together or separately with the same or different training methods. Meanwhile, as the design and positions are different, some exits may need longer training than others. In the context of the present invention, the training of those exits is stopped whose loss is no longer reducing and let the other training continue until a maximum epoch limit.

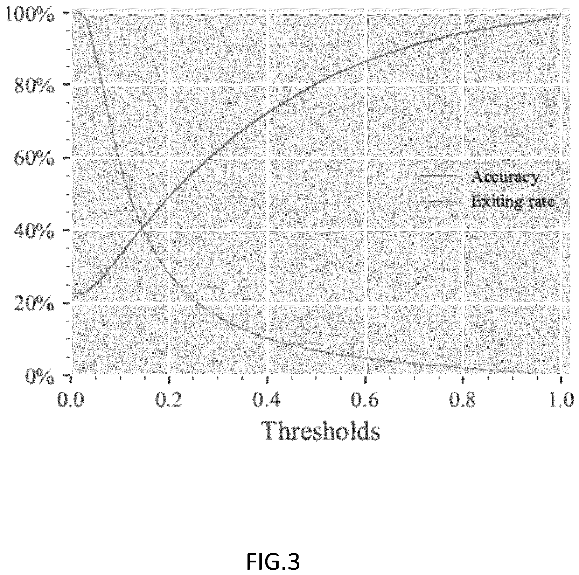

FIG.3 illustrates accuracy and predictions having higher confidence than the threshold by an early exit. As the threshold increases, fewer samples exit at this point, while the accuracy rises.

In an embodiment of the present invention, the stand-alone performance of an early exit might be not high because it may be attached to an initial segment and prior backbone segments (layers) may not be originally designed to support this exit. However, when a group of early exits is used, the cooperation of early exits can avoid a large art of incorrect predictions. As shown in FIG.3, an early exit would exit fewer samples within the increasing threshold, but these predictions are more accurate. This observation indicates that though the early exits' stand-alone accuracy may not be satisfying, their high-confidence predictions are still trustworthy. In a group of early exits with high thresholds applied, samples may be exited by either a highly confident early exit or the final exit. In this case, the overall accuracy may be maintained at a high level while some complexity has been saved.

In an embodiment of the present invention, the number of possible early exits combination is $\Pi_{n=1}^{N-1}(K_n + 1)$, with an associated threshold. Therefore, an algorithm is provided for selecting which one of the huge number of early-exit configuration possibilities should be used under a specific constraint. The configuration searching consider two aspects, performance and complexity. In the present approach, they are defined as the overall accuracy, and relative value of MAC operations to the original network. In this invention, the accuracy and complexity are measured relative to the original model. The overall accuracy of a configuration relative to the accuracy of original model may be defined as $A(G)$ and the overall number of MAC (multiply-accumulate) operations relative to the MAC of original model may be defined as C(G).

This system may consider the trade-off between performance and complexity in a fine grain. The trade-off factor $\lambda$ may be defined to control the weight between performance and complexity. The optimized configurations may be searched by minimizing the object function $f(G,\lambda) = \lambda(1 - A(G)) + (1 - \lambda)C(G)$. Every trade-off factor $\lambda$ may result in a different configuration. By traveling $\lambda$ with a small step, this invention can provide nearly continuous options of performance and complexity.

The overall accuracy may be basically computed by summarizing correct predictions of any early exits dividing by the dataset size. Concretely, supposing that the backbone network 102 includes N segments and a dataset includes M samples. By executing the inference algorithm (as described in FIG.2) on that dataset, for every sample, every early exit output in a configuration $G = \{k, t\}$ may be recorded as $\tilde{y}_{n,kn}$ and the predicted probability of $i^{th}$ class for $m^{th}$ sample may be represented as $\tilde{y}_{n,k_n}^{(m,i)}$. The set $W_n(k, t)$ is defined to be including indices of samples that have higher confidence than the corresponding threshold $t_n$ at $n^{th}$ early exit. $U_n(k,t)$ is $W_n(k,t)$ excluding any previously exited samples, i.e., indices of samples which are exited by $n^{th}$ early exit. $V_n(k, t)$ is a subset of $U_n(k, t)$ where every prediction is correct. These variables may be defined mathematically in Equations (2), (3) and (4).

$$W_n(k,t) = \left\{ m : \max \tilde{y}_{n,k_n}^{(m,i)} \geq t_{n\}} \right\} \dots\dots\dots\dots\dots\dots\dots(2)$$

$$U_n(k,t) = W_n(k,t) / \cup_{n'=1}^{n-1} W_{n'}(k,t) \dots\dots\dots\dots\dots\dots(3)$$

$$V_n(k) = \{ m : argmax_i\left(\tilde{y}_{n,k_n}^{(m,i)}\right) = \tilde{y}^{(m,i)}\}\dots\dots\dots\dots\dots(4)$$

where the maximisation above is done over all possible classes (indexed by $i$). The number of samples that reach and exit from the $n^{th}$ early exit of configuration $G = \{k, t\}$ may be counted as $E_n = \{k, t\}$ and the number of these that are correct may be counted as $EC_n = \{k, t\}$

$$E_n(k,t) = |U_n(k,t)| \dots\dots\dots\dots\dots\dots\dots\dots\dots\dots(5)$$

$$EC_n(k,t) = |U_n(k,t) \cap V_n(k)| \dots\dots\dots\dots\dots(6)$$

where |S| means the cardinality of a set S.

Normally, the accuracy may be measured by the corrected predictions over the total, i.e., $\frac{EC_n(k,t)}{E_n(k,t)}$. However, when the threshold of an early exit is high, and it only exits a few samples, the sample mean estimation of accuracy may be unreliable as the number of samples is too small. For example, in FIG. 3, there may be a sudden increase of accuracy to 100% when the threshold is close to 1. Therefore, the sampled mean may be replaced with a conservative value as the estimation of an early exit. It may be assumed that the accuracy of an early exit in a specific configuration

$A_n(k,t)$ obeys the Beta distribution.

$$A_n(\boldsymbol{k},\boldsymbol{t}) \sim Beta(1 + a, 1 + b - a) \quad \dots\dots\dots\dots\dots\dots\dots\dots(7)$$

where $a = |E_n(\boldsymbol{k},\boldsymbol{t})|$, the number of predictions made by $n^{th}$ early exit, and $b = |EC_n(\boldsymbol{k},\boldsymbol{t})|$ is the number of correct predictions.

Then, the probability of $A_n(\boldsymbol{k},\boldsymbol{t})$ may not be greater than $x$ by the cumulative distribution function (CDF) $I_x$ of the Beta distribution.

$$P(A_n(\boldsymbol{k},t) \le x) = I_x(1 + a, 1 + b - a) \dots\dots\dots\dots\dots\dots\dots\dots(8)$$

A conservative estimation of $A_n(k,t)$ is computed by the inverse Beta CDF $I_P^{-1}$ such that the true value is most likely (90%) being higher than it.

$$A_n(\boldsymbol{k},t) = I_{0.1}^{-1}(1 + a, 1 + b - a)\dots\dots\dots\dots\dots\dots\dots\dots\dots(9)$$

Now, the overall accuracy may be defined as:

$$A(\boldsymbol{k},\boldsymbol{t}) = \frac{1}{M}\sum_{n=1}^{N}|E_n(k,t)| A_n(k,t)\dots\dots\dots\dots\dots\dots\dots\dots(10)$$

Comparing with the normal way to calculate the accuracy. This approach penalizes the accuracy metric if the number of samples is insufficient. It would not make any difference if the dataset is huge, but it would make the search algorithm more robust for small datasets.

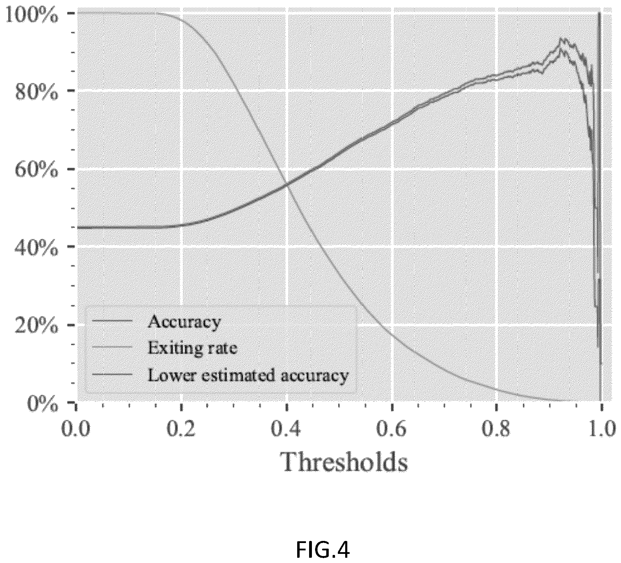

FIG.4 illustrates accuracy and exiting rate with respect to different thresholds by the first early exit (located at 1st connection's output) of a deep neural network, in accordance with an embodiment of the present invention. The lower estimated accuracy excludes the unreliable accuracy when the threshold is high. There is a huge fluctuation in the directly measured accuracy when the threshold is higher than 0.9. However, this area cannot represent the true performance in practice as it is observed from a very limited number of samples. The lower estimation of accuracy can penalize these less significant results such that the irregular high accuracy would not mislead the search algorithm.

In an embodiment of the present invention, the number of MAC operations in a given functional block with respect to the total number of MAC operations in the original network is referred to as complexity. The following normalised complexity measures are defined. Let $S_n$ be the complexity of the $n^{th}$ segment alone. Accordingly, $\sum_{n=1}^{N} S_n = 1, 2)$. Let $\Delta_{n,k} > 0 \ge 0$ be the complexity of the early exit function $f_{n,k}$. Note that $\Delta_{n,0} = 0$ for all n as this is the 'no early exit' i.e. early exit disabled, option. Then the average run-time complexity of a configuration is defined as:

$$C(\boldsymbol{k},\boldsymbol{t}) = \frac{1}{M}\sum_{n=1}^{N} E_n(k_n, t_n) \sum_{n'=1}^{n}(S_{n'} + \Delta_{n',k_{n'}}) \dots\dots\dots\dots\dots\dots\dots\dots(11)$$

In an embodiment of the present invention, the model compression takes into account of both performance and complexity. The proposed dynamical compression method is designed to generate a series of configurations that have different importance to the performance and complexity. Both the factors may be summarized with a parameter $\lambda$ into the following target function:

$$f(\boldsymbol{k},\boldsymbol{t},\lambda) \triangleq \lambda(1 - A(\mathbf{k},\mathbf{t})) + (1 - \lambda)C(\mathbf{k},\mathbf{t}) \dots\dots\dots\dots\dots\dots(12)$$

Where $0 \le \lambda \le 1$ is a user-controlled parameter to adjust the relative importance of accuracy and complexity, i.e., as $\lambda \to 1$, a minimization process would maximize the accuracy with no consideration to the complexity cost. Conversely, as $\lambda \to 0$, solutions with minimal complexity would be found at the cost of accuracy. This function may be used as the target of a minimization algorithm.

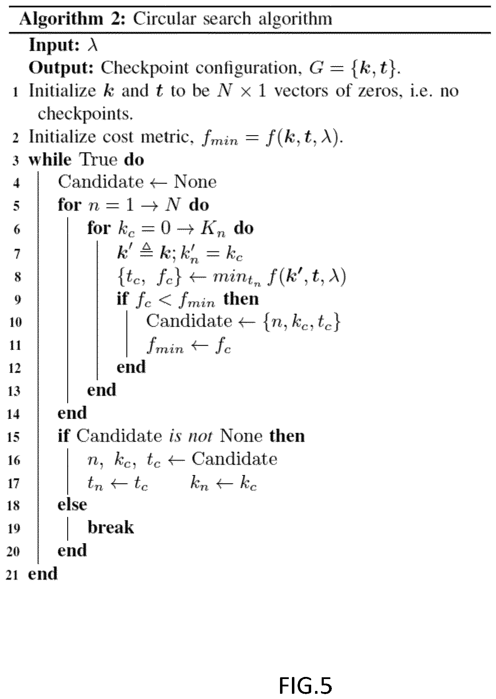

In another embodiment of the present invention, a configuration is to be determined that minimizes the average cost for a specified $\lambda$. A brute force algorithm is not feasible due to the enormous number of possible early exit configurations coupled with the complexity of evaluating the average cost for each. Therefore, two search approaches have been proposed using the acceptable time to find configurations with a given $\lambda$. FIG.5 illustrates a circular search algorithm for searching an early exit configuration, in accordance with an embodiment of the present invention.

The circular search starts with searching with an empty early exit configuration. For every iteration, every possible early exit at every position is gone through, and one modification is updated with the lowest object value $f_{min}$ to the current configuration. The iteration would continue until it cannot find any modifications to make $f_{min}$ lower, where

$$\min_{t_n} \; f(\boldsymbol{k}', \boldsymbol{t}, \lambda)$$

is bounded by minimization algorithm to find a $t_c \in (0, 1)$ and make the function value minimized to $f_c$.

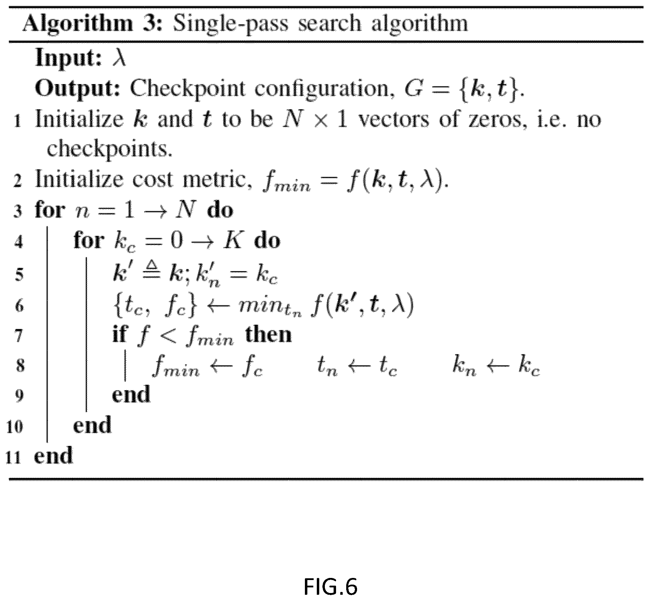

FIG.6 illustrates a single search algorithm for searching early exit configuration, in accordance with an embodiment of the present invention. The circular search algorithm might be time-consuming when the dataset is large. The single search algorithm may only pass once from the first segment to the last. The algorithm starts by assuming an empty configuration, beginning with the first possible early exit position ($n = 1$) and adding the option to help the configuration achieve the lowest $f_{min}$. With this modification taken into use, the next early exit position is considered until $n = N$, i.e., a single-pass can be made through all possible early exit positions. The single-pass algorithm dramatically reduces the searching time, and the present experiment indicates that the single-pass algorithm can usually finish in minutes without negatively impacting results.

The search algorithm's result is a specific configuration with a complexity/performance trade-off determined by the parameter $\lambda$. This searching process can be repeated with various values of $\lambda$ to yield other configurations having different trade-off characteristics. A device, which finally uses this model for inference, can store several pre-defined configurations and switch among them at run-time to implement a dynamical model compression depending on the real-time situation.

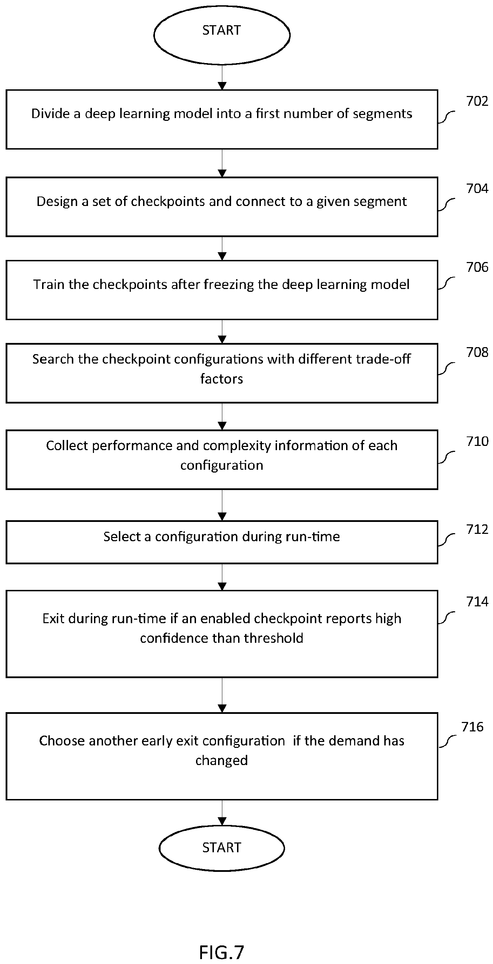

FIG. 7 is a flowchart illustrating a method of applying dynamic model compression to a deep learning model, in accordance with an embodiment of the present invention.

At step 702, an existing deep learning model is divided into a first number of segments. The deep learning model is pre-trained.

At step 704, a set of early exits are designed for each segment, and connected to the output of each segment.

At step 706, the existing deep learning model is frozen, the set of early exits of the given segment are trained, and the outputs of all early exits are recorded on the training dataset. Also, the early exits may be grouped into various early exit configurations to obtain the required trade-off. Each early exit configuration guide which early exits are enabled, and the condition of exiting at those early exits.

At step 708, the early exit configurations with different trade-off factors are searched according to the training record.

At step 710, the performance and complexity information of each configuration is collected.

At step 712, the early exit configuration which has suitable performance and complexity is being selected during inference run time.

At step 714, the configuration is exited during run-time once an enabled early exit reports high confidence than corresponding threshold. More computations may be spent on those inputs that cause the early exits to have less confidence regarding early-exit decisions, i.e. difficult inputs, while easy inputs are mostly exited at early stages.

At step 716, another early exit configuration is chosen if the demand has changed. Thus, it is possible to switch configurations at run-time to achieve dynamic compression. The demand constitutes computational complexity(energy consumption) and accuracy. The demand changes based on the application, for example, the user may choose a low complexity configuration when the battery is running out and a high accuracy one if the accuracy is very important.

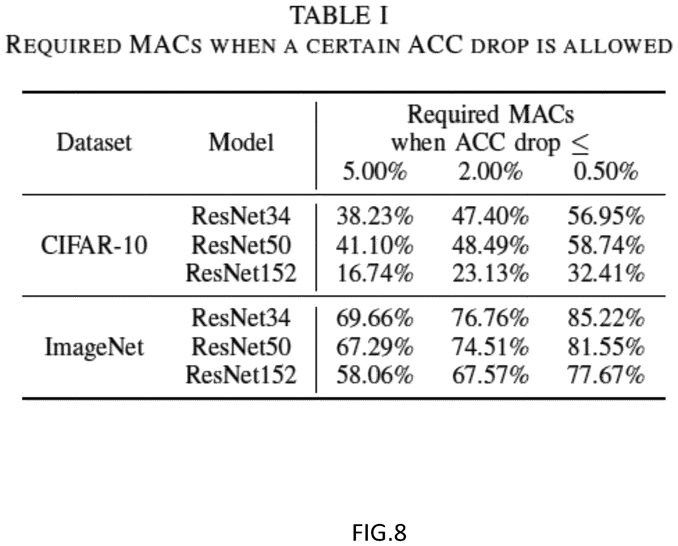

FIG.8 shows a table illustrating required MACs (indicative of complexity) when a certain Accuracy drop is allowed, while implementing dynamic model compression on different networks with different datasets. It can be seen that as a compression method, dynamic model compression has the ability to save computation with minor cost. As Table I shows, the proposed system only needs 85.22%, 81.55% and 77.67% of MACs to maintain the same level of accuracy (drop $\leq 0.5\%$) for three database variants on a deep learning model such as ImageNet. For the task, that model is more redundant to, CIFAR-10, it only requires 56.95%, 58.74% and 32.41% of MACs for achieving similar accuracy. If more accuracy drops are allowed, the dynamic compression model can further reduce the computation by about 15% to 20% within 5% loss in accuracy.

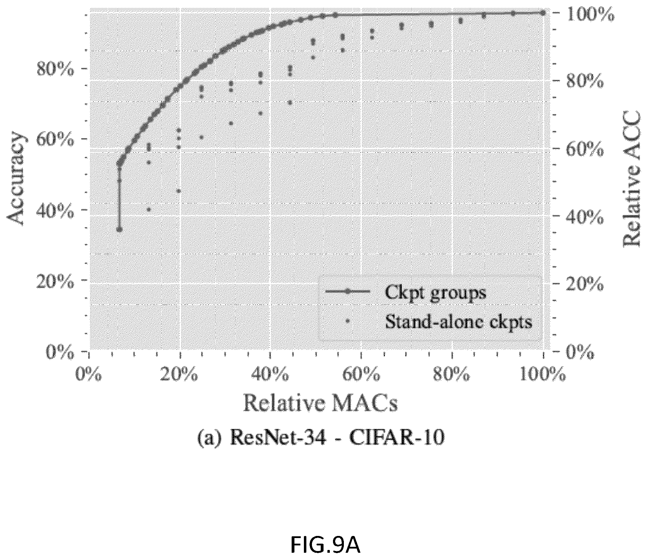

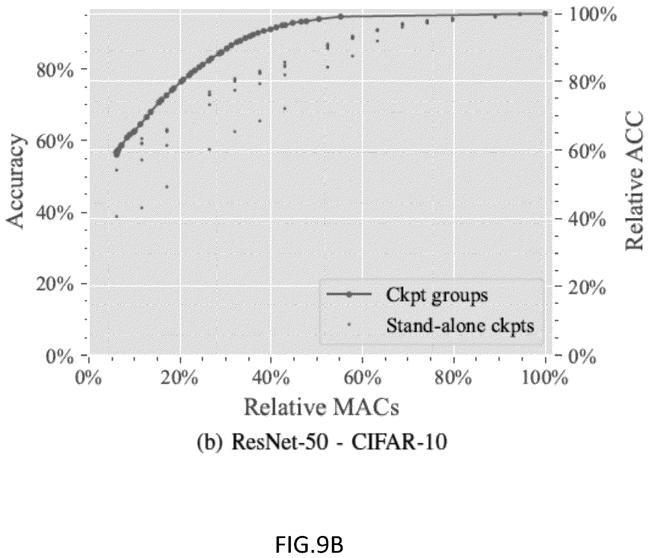

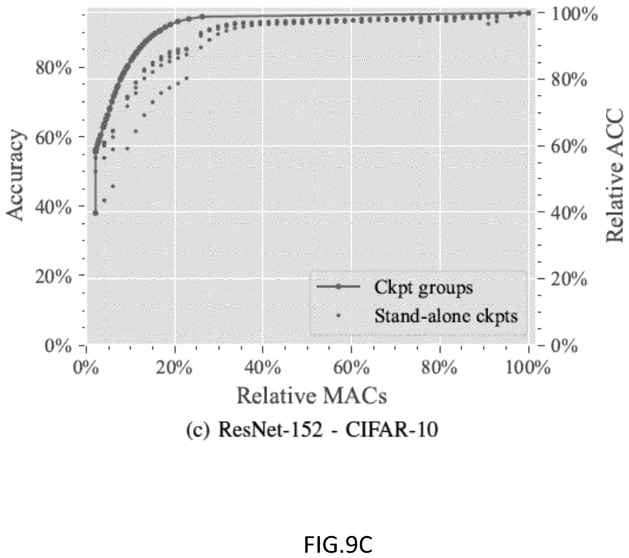

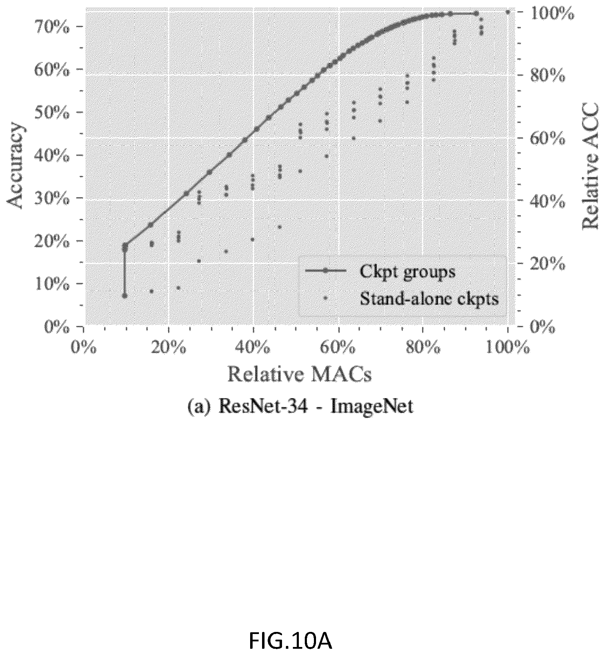

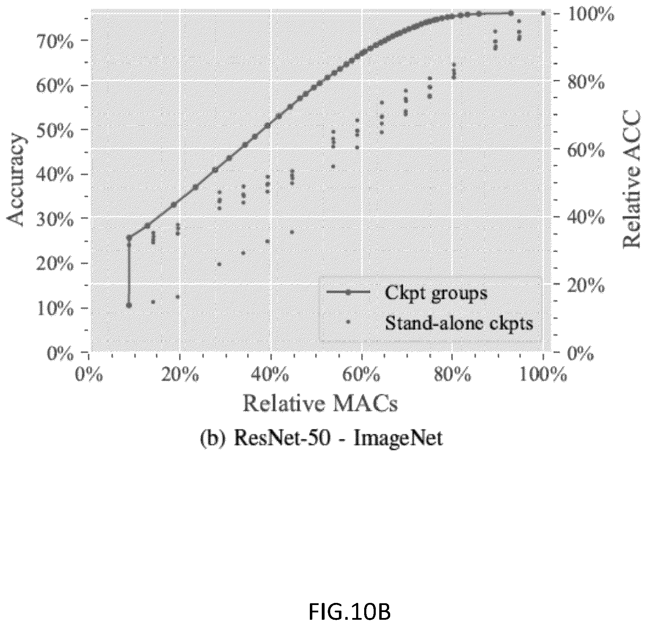

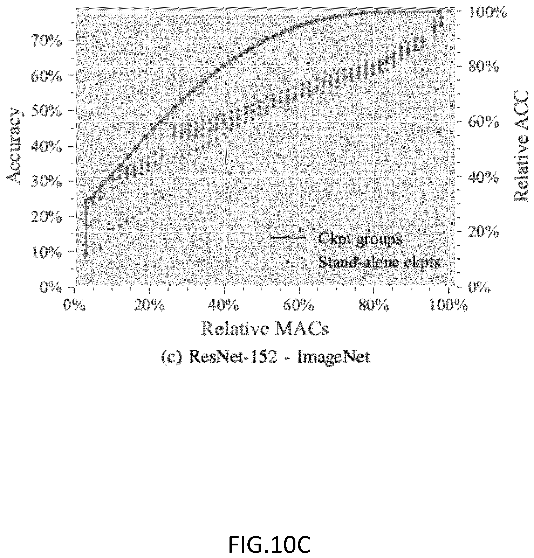

FIGs.9A, 9B and 9C illustrate performance of searched configuration and stand-alone early exits for three different types of neural networks ResNet 34, ResNet 50 and ResNet 152 respectively on dataset such as CIFAR-10. FIGs.10A, 10B and 10C illustrate performance of searched configuration and stand-alone early exits for three different types of neural networks ResNet 34, ResNet 50 and ResNet 152 respectively on dataset such as ImageNet.

Another feature of Dynamic compression model (DyCE) is supporting the dynamic scaling, as different $\lambda$ would result in configurations with varying compression preferences. The top curves in FIGs. 9A-9C and 10A-10C represent configurations that the user can choose during the run-time. Each curve is generated by different $\lambda$ with 0.01 interval, but more configurations can be created with more dense $\lambda$ so the system can configure its trade-off in a nearly continuous schema. Also, an attempt has been made to demonstrate the ability of many early exits working together (the top curve) to out-perform individual stand-alone exits (bottom dots). To obtain the stand-alone performance, a configuration is simulated with just one early exit enabled and its threshold is set to zero so as to always exit at that point. This is then repeated for all possible early exits yielding the family of 'bottom dots'. This illustrates, for example, in FIG. 10C, that at a complexity target of 40%, the best available individual early exit only has an accuracy of $\approx 50\%$, whereas there is group of early exits available that would yield an accuracy of $\approx 60\%$. Alternatively, an accuracy target of, for example, 60%, can be considered, and it can be seen that it could only be achieved with a complexity of $\approx 80\%$ using stand-alone early exits. In contrast, there is group of early exits available. By altering early-exit configurations, the proposed technique can dynamically scale model complexity during run-time to meet real-time performance requirements. The ResNet152's complexity is scaled from 16.74-32.41% on CIFAR-10 and 58.06-77.67% on ImageNet, with the accuracy loss of 5.0~0.5%. that would yield the required accuracy with only 40% complexity. This demonstrates that an early exit configuration's performance is not just a weighted sum of all its enabled early exits' performances.

The performance curves have illustrated that the first term, i.e., the extra computation, is negligible compared to the overall reduction. The additional memory, the second term, is necessary to store early exit networks. While its amount can also be limited in practice as applications may not require the full range of performance or the high density of configurations. On the other hand, storing some small networks is still saving compared with storing other model variants for a system requiring varying performance.

It is to be apparent to one of ordinary skill in the art, that the dynamic compression (DyCE) method is demonstrated with the example of image classification. However, DyCE can be built in alternative ways and deployed to more applications for more tasks. There should be no barriers to adapting DyCE to other tasks and hierarchical models. DyCE can be applied to any models that are dividable along the depth if the early exit can be designed to generate a candidate prediction in a compatible format as the original output and produce prediction confidence from the output. For example, Transformers for natural language processing may be stacked by dividable blocks, and the confidence can be interpreted from the largest value in its output vector. Therefore it is possible to apply DyCE for Transformer architecture.

Further, it is to be noted that a part of the backbone with an early exit network can be considered a smaller version of the original model. Early exits and the final exit match the student and teacher model concepts in knowledge distillation. Therefore, instead of choosing ground truth labels as the target, early exits can be trained to minimize the differences between early predictions and the final for any inputs. This would allow building or finetuning the dynamic compression model (DyCE) system without a labelled dataset if the pretrained model exists. Using unlabelled data means much easy to acquire data, and early exits can keep learning from any inputs to this system.

Further, because every exit is independent, this system can be modified to assign different tasks for each early exit, such as face recognition, object detection, and image-to-text. These early exits with different tasks can be organized in a logical order for specific applications. For the example of the face recognition task, coarse-grained classifies may be assigned for the first few exit positions telling if there are objects in front of the camera. The next few early exits may be fine-grained classifies to confirm a human face in sight. After that, the last few early exits may run the regular recognition task. Having a high performance for a small network is difficult, but it is still possible to get rough answers with limited computation. The early exits attached to the shallow layers may focus on easy but usual sub-tasks.

In an embodiment of the present invention, the early-exit system treats the model in a hierarchy. The feature of each early-exit network that can output independently makes it possible to store the model in parts and execute the inference on different devices. The use case could be running the first few layers on a local device while hosting the rest of model remotely. In this case, most simple jobs can be done locally to have fast response, reduce communications and alleviate privacy issues. In an example, a deep network may split into multiple parts and store its initial part only on the end device with minimal memory or computing capability. The inference may exit with a very short latency if the early exit network of that part is enough to give an acceptable result. For complex events, the end device may transmit that sample to edge devices or cloud servers for further inferences. This scheme deals with most samples locally to provide real-time feedback but also tackles complex events by using large networks on remote servers.

In an embodiment of the present invention, all early exits are required to have the same output format as the original network. However, they are not necessarily the same as every exit is independent from each other. The different early exits can be trained for different tasks sharing the same backbone. For example, for face recognition problem, an early exit can use a small part of backbone to determine whether a person is in front of the camera and a late early exit can use more layers to determine who he/she is.

The invention is not limited to the embodiments hereinbefore described but may be varied in both construction and detail.

In the specification, the terms "comprise, comprises, comprised and comprising" or any variation thereof and the terms include, includes, included and including" or any variation thereof are considered to be interchangeable, and they should all be afforded the widest possible interpretation and vice versa.

## Claims

1.   A method of dynamically compressing and scaling a deep neural network, comprising:

dividing the deep neural network into a plurality of segments, and a final early exit connected to a last segment of the plurality of segments;
connecting at least one early exit to an output of each segment during run-time, based on an early exit configuration that is determined dynamically during the run-time based on a target accuracy and complexity; and
ending the run-time and exiting the deep neural network from an early exit, and setting an output of said early exit as a final output of the deep neural network, when said early exit reports a confidence value higher than an associated threshold.

2.   The method as claimed in claim 1, wherein each early exit comprises:

an early exit function for receiving an output of a previous segment and generating an output in a format compatible with the deep neural network; and
a decision function for deciding whether to exit early or not by comparing a confidence value from an output of the early exit function with an associated threshold, passing the output of the previous segment to a next segment, when the confidence value is less than the associated threshold, and exit the computing from the deep neural network with the output of the early exit function when the confidence value is greater than or equal to the associated threshold.

3.   The method as claimed in claim 2, wherein the early exit configuration enumerates early exit function and associated threshold value to be used at output of each segment of the deep neural network, and wherein the early exit configuration is dynamically selected from a set of candidate early exit configurations based on the target accuracy and complexity.

4.   The method as claimed in claim 3, wherein the set of candidate early exit configurations is formulated based on a plurality of combinations of a plurality of candidate early exit functions of each segment, and a plurality of candidate threshold values of each early exit function.

5.   The method as claimed in any preceding claim further comprising setting the threshold value of the last early exit as zero, and forcing an exit at the last early exit for all data samples that haven't previously exited early.

6.   The method as claimed in any preceding claim further comprising searching the set of candidate early exit configurations by experimenting with different trade-off factors, wherein the trade-off factor is a parameter to control weighting of accuracy and complexity.

7.   The method as claimed in any claim 6 further comprising employing a circular search for dynamically determining the early exit configuration, by modifying early exit function and associated threshold value of each early exit position iteratively to obtain an early exit configuration whose trade-off factor is not optimizable further.

8.   The method as claimed in claim 6 further comprising employing a singular search for dynamically determining the early exit configuration, by modifying early exit function and associated threshold value of first to last early exit positions sequentially to obtain an early exit configuration with optimized trade-off factor.

9.   The method as claimed in any preceding claim, further comprising switching to another check-point configuration during run-time, based on the demand of the deep neural network.

10.  A dynamically compressible and scalable deep neural network, comprising:

a plurality of segments;
a final early exit connected to a last segment of the plurality of segments; and

at least one early exit attachable to an output of each segment during run-time, based on an early exit configuration that is determined dynamically during the run-time based on a target accuracy and complexity, wherein the run-time ends and the deep neural network is exited from an early exit, when said early exit reports a confidence value higher than an associated threshold.

11. The dynamically compressible and scalable deep neural network as claimed in claim 10, wherein each early exit comprises:

an early exit function for receiving an output of a previous segment and generating an output in a format compatible with the deep neural network; and
a decision function for deciding whether to exit early or not by comparing a confidence value from an output of the early exit function with an associated threshold, passing the output of the previous segment to a next segment, when the confidence value is less than the associated threshold, and exit the computing from the deep neural network with the output of the early exit function when the confidence value is greater than or equal to the associated threshold.

12. The dynamically compressible and scalable deep neural network as claimed in claim 10, wherein the early exit configuration enumerates early exit function and associated threshold value to be used at output of each segment of the deep neural network, and wherein the early exit configuration is dynamically selected from a set of candidate early exit configurations based on the target accuracy and complexity.

13. A non-transitory computer readable medium having stored thereon computer-executable instructions which, when executed by a processor, cause the processor to:

divide a deep neural network into a plurality of segments, and a final early exit connected to a last segment of the plurality of segments;
connect at least one early exit to an output of each segment during runtime, based on an early exit configuration that is determined dynamically during the run-time based on a target accuracy and complexity; and
end the run-time and exit the deep neural network from an early exit, and setting an output of said early exit as a final output of the deep neural network, when said early exit reports a confidence value higher than an associated threshold.

FIG.1A

EP 4 455 945 A1

102

108

$\boldsymbol{o}_{n-1}$

Segment: $n$

$\boldsymbol{o}_n$

Segment: $n+1$

$\boldsymbol{o}_{n+1}$

$k=0$

1

2

$K_n$

no checkpoint

$f_{n,1}(\boldsymbol{o}_n)$

$f_{n,2}(\boldsymbol{o}_n)$

$f_{n,K_n}(\boldsymbol{o}_n)$

$\tilde{\boldsymbol{y}}_{n,1}$

$\tilde{\boldsymbol{y}}_{n,2}$

$\tilde{\boldsymbol{y}}_{n,K_n}$

$\emptyset$

$\tilde{\boldsymbol{y}}_n$

Backbone network

Possible checkpoints
after the $n^{\text{th}}$ segment

FIG.1B

**Algorithm 1:** Run-time Inference Algorithm

**Input:** Checkpoint configuration, $G = \{k, t\}$, where $k$ and $t$ and length $N$ vectors.

**Output:** The vector of class probabilities: $\hat{y}$

**for** $n = 1 \rightarrow N$ **do**

$\quad$ $k = k_n$ and $t = t_n$

$\quad$ Execute $n^{\text{th}}$ segment of backbone network $\rightarrow o_n$

$\quad$ **if** $k \neq 0$ **then**

$\quad\quad$ $\tilde{y} = f_{n,k}(o_n)$

$\quad\quad$ **if** $\max(\tilde{y}) \geq t$ **then**

$\quad\quad\quad$ $\hat{y} \leftarrow \tilde{y}$

$\quad\quad\quad$ Exit early.

$\quad\quad$ **end**

$\quad$ **end**

**end**

FIG.2

FIG.3

FIG.4

---

**Algorithm 2:** Circular search algorithm

---

**Input:** $\lambda$

**Output:** Checkpoint configuration, $G = \{k, t\}$.

Initialize $k$ and $t$ to be $N \times 1$ vectors of zeros, i.e. no checkpoints.

Initialize cost metric, $f_{min} = f(k, t, \lambda)$.

**while** True **do**

    Candidate $\leftarrow$ None

    **for** $n = 1 \rightarrow N$ **do**

        **for** $k_c = 0 \rightarrow K_n$ **do**

            $k' \triangleq k; k'_n = k_c$

            $\{t_c,\ f_c\} \leftarrow min_{t_n} f(k', t, \lambda)$

            **if** $f_c < f_{min}$ **then**

                Candidate $\leftarrow \{n, k_c, t_c\}$

                $f_{min} \leftarrow f_c$

            **end**

        **end**

    **end**

    **if** Candidate *is not* None **then**

        $n,\ k_c,\ t_c \leftarrow$ Candidate

        $t_n \leftarrow t_c \qquad k_n \leftarrow k_c$

    **else**

        **break**

    **end**

**end**

# FIG.5

**Algorithm 3:** Single-pass search algorithm

**Input:** $\lambda$

**Output:** Checkpoint configuration, $G = \{k, t\}$.

Initialize $k$ and $t$ to be $N \times 1$ vectors of zeros, i.e. no checkpoints.

Initialize cost metric, $f_{min} = f(k, t, \lambda)$.

**for** $n = 1 \rightarrow N$ **do**

    **for** $k_c = 0 \rightarrow K$ **do**

        $k' \triangleq k;\, k'_n = k_c$

        $\{t_c,\, f_c\} \leftarrow min_{t_n} f(k', t, \lambda)$

        **if** $f < f_{min}$ **then**

            $f_{min} \leftarrow f_c \qquad t_n \leftarrow t_c \qquad k_n \leftarrow k_c$

        **end**

    **end**

**end**

FIG.6

START

Divide a deep learning model into a first number of segments — 702

Design a set of checkpoints and connect to a given segment — 704

Train the checkpoints after freezing the deep learning model — 706

Search the checkpoint configurations with different trade-off factors — 708

Collect performance and complexity information of each configuration — 710

Select a configuration during run-time — 712

Exit during run-time if an enabled checkpoint reports high confidence than threshold — 714

Choose another early exit configuration if the demand has changed — 716

START

FIG.7

## TABLE I
### REQUIRED MACs WHEN A CERTAIN ACC DROP IS ALLOWED

| Dataset | Model | Required MACs when ACC drop $\leq$ | | |
| --- | --- | --- | --- | --- |
| | | 5.00% | 2.00% | 0.50% |
| CIFAR-10 | ResNet34 | 38.23% | 47.40% | 56.95% |
| | ResNet50 | 41.10% | 48.49% | 58.74% |
| | ResNet152 | 16.74% | 23.13% | 32.41% |
| ImageNet | ResNet34 | 69.66% | 76.76% | 85.22% |
| | ResNet50 | 67.29% | 74.51% | 81.55% |
| | ResNet152 | 58.06% | 67.57% | 77.67% |

FIG.8

(a) ResNet-34 - CIFAR-10

FIG.9A

(b) ResNet-50 - CIFAR-10

FIG.9B

(c) ResNet-152 - CIFAR-10

FIG.9C

(a) ResNet-34 - ImageNet

FIG.10A

(b) ResNet-50 - ImageNet

FIG.10B

(c) ResNet-152 - ImageNet

FIG.10C

Europäisches
Patentamt

European
Patent Office

Office européen
des brevets

# EUROPEAN SEARCH REPORT

Application Number

EP 23 17 0174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kouris Alexandros ET AL: "Multi-Exit Semantic Segmentation Networks", arXiv.org, 24 June 2022 (2022-06-24), pages 1-25, XP093011033, Ithaca Retrieved from the Internet: URL:https://arxiv.org/pdf/2106.03527v2.pdf [retrieved on 2023-01-02] * page 1 - page 14, paragraph 4 * * page 20 - page 25 * | 1-13 | INV. G06N3/082 G06N3/045 G06N3/0985 |
| X | EP 3 996 054 A2 (SAMSUNG ELECTRONICS CO LTD [KR]) 11 May 2022 (2022-05-11) * abstract; claims 1-15; figures 1-12 * * paragraph [0005] - paragraph [0155] * | 1-13 | |
| A | ODEMA MOHANAD MODEMA@UCI EDU ET AL: "EExNAS", PROCEEDINGS OF THE ACM/IEEE INTERNATIONAL SYMPOSIUM ON LOW POWER ELECTRONICS AND DESIGN, IEEE PRESSPUB767, PISCATAWAY, NJ, USA, 26 July 2021 (2021-07-26), pages 1-6, XP058652427, DOI: 10.1109/ISLPED52811.2021.9502503 * the whole document * | 1-13 | TECHNICAL FIELDS SEARCHED (IPC) G06N |
| A | BENJAMIN BIGGS ET AL: "ATHEENA: A Toolflow for Hardware Early-Exit Network Automation", ARXIV.ORG, CORNELL UNIVERSITY LIBRARY, 201 OLIN LIBRARY CORNELL UNIVERSITY ITHACA, NY 14853, 17 April 2023 (2023-04-17), XP091487598, * the whole document * | 1-13 | |

-/--

The present search report has been drawn up for all claims

| Place of search | Date of completion of the search | Examiner |
|---|---|---|
| The Hague | 26 September 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

**EP 23 17 0174**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/362269 A1 (BARAD HAIM [IL]) 28 November 2019 (2019-11-28) * the whole document * ----- | 1-13 | |
| A | US 2022/358358 A1 (RAJE SAURABH MANISH [IN] ET AL) 10 November 2022 (2022-11-10) * the whole document * ----- | 1-13 | |

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| The Hague | 26 September 2023 | Volkmer, Markus |

EPO FORM 1503 03.82 (P04C01)

## ANNEX TO THE EUROPEAN SEARCH REPORT
## ON EUROPEAN PATENT APPLICATION NO.

EP 23 17 0174

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2023

| Patent document cited in search report | | Publication date | Patent family member(s) | | Publication date |
|---|---|---|---|---|---|
| EP 3996054 | A2 | 11-05-2022 | CN 116438570 | A | 14-07-2023 |
| | | | EP 3996054 | A2 | 11-05-2022 |
| | | | US 2023128637 | A1 | 27-04-2023 |
| | | | WO 2022098203 | A1 | 12-05-2022 |
| US 2019362269 | A1 | 28-11-2019 | DE 102020119090 | A1 | 18-02-2021 |
| | | | US 2019362269 | A1 | 28-11-2019 |
| US 2022358358 | A1 | 10-11-2022 | NONE | | |

For more details about this annex : see Official Journal of the European Patent Office, No. 12/82